# EUROPEAN PATENT APPLICATION

(11) **EP 4 734 650 A1**
(43) Date of publication of application: **29.04.2026**
(21) Application number: 23942719.8
(22) Date of filing: 26.06.2023
(51) Int. Cl.: H04W 76/00, H04W 76/10, H04W 72/02

(54) **METHOD FOR WIRELESS COMMUNICATION, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN)
(74) Representative: RGTH
(86) International application number: PCT/CN2023/102454
(87) International publication number: WO 2025/000191

(57) **Abstract**

A method for wireless communication, a terminal device, and a network device. The method comprises: a first terminal device determines, according to first information, a first channel from among multiple channels supported by a current cell. The first information comprises one or multiple of the following: weight parameters of the multiple channels; a first identifier associated with the first terminal device; a first channel group to which the first terminal device belongs, wherein the multiple channels belong to multiple channel groups, and the first channel group is one of the multiple channel groups; and first indication information sent by a network device, the first indication information being used to indicate the first channel to the first terminal device. Introduction of the first information facilitates the first terminal device in selecting a suitable channel.

## Description

### TECHNICAL FIELD

This application relates to the field of communications technologies, and more specifically, to a wireless communication method, a terminal device, and a network device.

### BACKGROUND

In some common scenarios (for example, a zero-power communication scenario), before obtaining energy, a terminal device cannot receive any signal transmitted by a network device. If a plurality of channels are deployed in a system, the terminal device cannot determine a channel among the plurality of channels through which the network device intends to communicate with the terminal device. Therefore, how to determine a channel on which the terminal device should transmit and receive a signal to interact with the network device is a problem to be resolved.

### SUMMARY

This application provides a wireless communication method, a terminal device, and a network device. The following describes various aspects of this application.

According to a first aspect, a wireless communication method is provided, including: determining, by a first terminal device based on first information, a first channel from a plurality of channels supported by a current cell, where the first information includes one or more of the following: weight parameters of the plurality of channels; a first identity associated with the first terminal device; a first channel group to which the first terminal device belongs, where the plurality of channels belong to a plurality of channel groups, and the first channel group is one of the plurality of channel groups; or first indication information transmitted by a network device, where the first indication information is used to indicate the first channel to the first terminal device.

According to a second aspect, a wireless communication method is provided, including: transmitting, by a network device, first information, where the first information is used by a first terminal device to determine a first channel from a plurality of channels supported by a current cell, and the first information includes one or more of the following: weight parameters of the plurality of channels; a first channel group to which the first terminal device belongs, where the plurality of channels belong to a plurality of channel groups, and the first channel group is one of the plurality of channel groups; or first indication information, where the first indication information is used to indicate the first channel to the first terminal device.

According to a third aspect, a terminal device is provided. The terminal device is a first terminal device, where the first terminal device includes: a determining module, configured to determine, based on first information, a first channel from a plurality of channels supported by a current cell, where the first information includes one or more of the following: weight parameters of the plurality of channels; a first identity associated with the first terminal device; a first channel group to which the first terminal device belongs, where the plurality of channels belong to a plurality of channel groups, and the first channel group is one of the plurality of channel groups; or first indication information transmitted by a network device, where the first indication information is used to indicate the first channel to the first terminal device.

According to a fourth aspect, a network device is provided, including: a communications module, configured to transmit first information, where the first information is used by a first terminal device to determine a first channel from a plurality of channels supported by a current cell, and the first information includes one or more of the following: weight parameters of the plurality of channels; a first channel group to which the first terminal device belongs, where the plurality of channels belong to a plurality of channel groups, and the first channel group is one of the plurality of channel groups; or first indication information, where the first indication information is used to indicate the first channel to the first terminal device.

According to a fifth aspect, a terminal device is provided, including: a transceiver, a memory, and a processor, where the memory is configured to store a program; and the processor is configured to invoke the program in the memory, and control the transceiver to receive or transmit a signal, to cause the terminal device to execute the method according to the first aspect.

According to a sixth aspect, a network device is provided, including: a transceiver, a memory, and a processor, where the memory is configured to store a program; and the processor is configured to invoke the program in the memory, and control the transceiver to receive or transmit a signal, to cause the network device to execute the method according to the second aspect.

According to a seventh aspect, an apparatus is provided, including a processor configured to invoke a program from a memory, to cause the apparatus to execute the method according to the first aspect or the second aspect.

According to an eighth aspect, a chip is provided, including a processor configured to invoke a program from a memory, to cause a device installed with the chip to execute the method according to the first aspect or the second aspect.

According to a ninth aspect, a computer-readable storage medium is provided, storing a program, where the program causes a computer to execute the method according to the first aspect or the second aspect.

According to a tenth aspect, a computer program product is provided, including a program, where the program causes a computer to execute the method according to the first aspect or the second aspect.

According to an eleventh aspect, a computer program is provided, where the computer program causes a computer to execute the method according to the first aspect or the second aspect.

First information used by a first terminal device to determine a channel is introduced in embodiments of this application. The first information may include, for example, one or more of the following: a weight parameter of a plurality of channels; a first identity associated with the first terminal device; a first channel group to which the first terminal device belongs; or first indication information transmitted by a network device. The first terminal device can select a suitable channel based on the first information.

### BRIEF DESCRIPTION OF DRAWINGS

FIG. 1 is an example diagram of a system architecture of a wireless communications system to which embodiments of this application are applicable.
FIG. 2 is an example diagram of a system architecture of a zero-power communications system.
FIG. 3 is an example diagram of an energy harvesting process in zero-power communication.
FIG. 4 is an example diagram of a backscatter communication process in zero-power communication.
FIG. 5 is an example diagram of a load modulation process of a zero-power terminal.
FIG. 6 is a schematic diagram of an encoding scheme of non-return-to-zero (non return zero, NRZ) encoding.
FIG. 7 is a schematic diagram of an encoding scheme of Manchester encoding.
FIG. 8 is a schematic diagram of an encoding scheme of unipolar return-to-zero encoding.
FIG. 9 is a schematic diagram of an encoding scheme of differential binary phase (differential binary phase, DBP) encoding.
FIG. 10 is a schematic diagram of an encoding scheme of Miller encoding.
FIG. 11 is a schematic flowchart of a wireless communication method according to an embodiment of this application.
FIG. 12 is an example diagram of a channel determining manner according to an embodiment of this application.
FIG. 13 is another example diagram of a channel determining manner according to an embodiment of this application.
FIG. 14 is another example diagram of a channel determining manner according to an embodiment of this application.
FIG. 15 is another example diagram of a channel determining manner according to an embodiment of this application.
FIG. 16 is a schematic flowchart of a wireless communication method according to another embodiment of this application.
FIG. 17 is a schematic structural diagram of a terminal device according to an embodiment of this application.
FIG. 18 is a schematic structural diagram of a network device according to an embodiment of this application.
FIG. 19 is a schematic diagram of an apparatus according to an embodiment of this application.

### DESCRIPTION OF EMBODIMENTS

Technical solutions in this application are described below with reference to the accompanying drawings.

### Wireless communications system

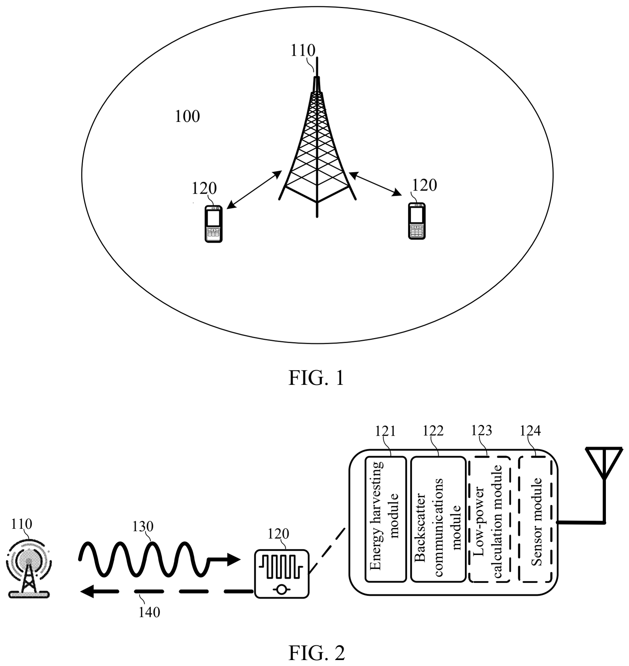

FIG. 1 is an example diagram of a system architecture of a wireless communications system 100 to which embodiments of this application are applicable. The wireless communications system 100 may include a network device 110 and a terminal device 120. The network device 110 may be a device that communicates with the terminal device 120. The network device 110 may provide network coverage for a specific geographical area, and may communicate with the terminal device 120 within the coverage. The terminal device 120 may access a network (for example, a wireless network) by using the network device 110. Optionally, the wireless communications system 100 may further include another network entity such as a network controller or a mobility management entity, which is not limited in embodiments of this application.

It should be understood that technical solutions of embodiments of this application may be applied to various communications systems, for example, a 5^{th} generation (5th generation, 5G) system or an NR system, a long term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6^{th} generation mobile communications system or a satellite communications system.

The terminal device in embodiments of this application may also be referred to as a user equipment (user equipment, UE), an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines. For example, the terminal device is a handheld device, a vehicle-mounted device, or the like having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the terminal device may be used to act as a base station. For example, the terminal device may act as a scheduling entity that provides a sidelink signal between terminal devices in V2X, D2D, or the like. For example, a cellular phone and a vehicle communicate with each other by using a sidelink signal. A cellular phone and a smart home device communicate with each other without relaying a communication signal through a base station.

The network device in embodiments of this application may be a device configured to communicate with the terminal device. The network device may be, for example, an access network device or a wireless access network device. For example, the network device may be a base station. The base station may broadly cover various names in the following, or may be interchangeable with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a home base station, a network controller, an access node, a wireless node, an access point (access point, AP), a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof.

Terminal devices may communicate with each other through a sidelink (sidelink). The sidelink communication may also be referred to as proximity services (proximity services, ProSe) communication, unilateral communication, side link communication, device to device (device to device, D2D) communication, or the like.

### Zero-power communication

Zero-power communication is a wireless communications technology. Zero-power communication may implement communication between a network device and a terminal device based on a radio frequency energy harvesting (radio frequency power harvesting) technology and a backscatter communications technology. Referring to FIG. 2, a zero-power communication network may include a network device 110 and a terminal device 120. In the zero-power communication network, the terminal device 120 may be referred to as a zero-power terminal. The network device 110 may be configured to transmit a wireless energy supply signal/downlink communication signal 130 to the zero-power terminal 120, and may receive a backscatter signal 140 from the zero-power terminal 120. The zero-power terminal 120 may include an energy harvesting module 121 and a backscatter communications module 122. In addition, the zero-power terminal 120 may further include a low-power calculation module 123 and/or one or more memory or sensor modules 124. The one or more memory or sensor modules 124 may be configured to store some basic information (such as an article identity) or obtain sensor data such as ambient temperature and ambient humidity.

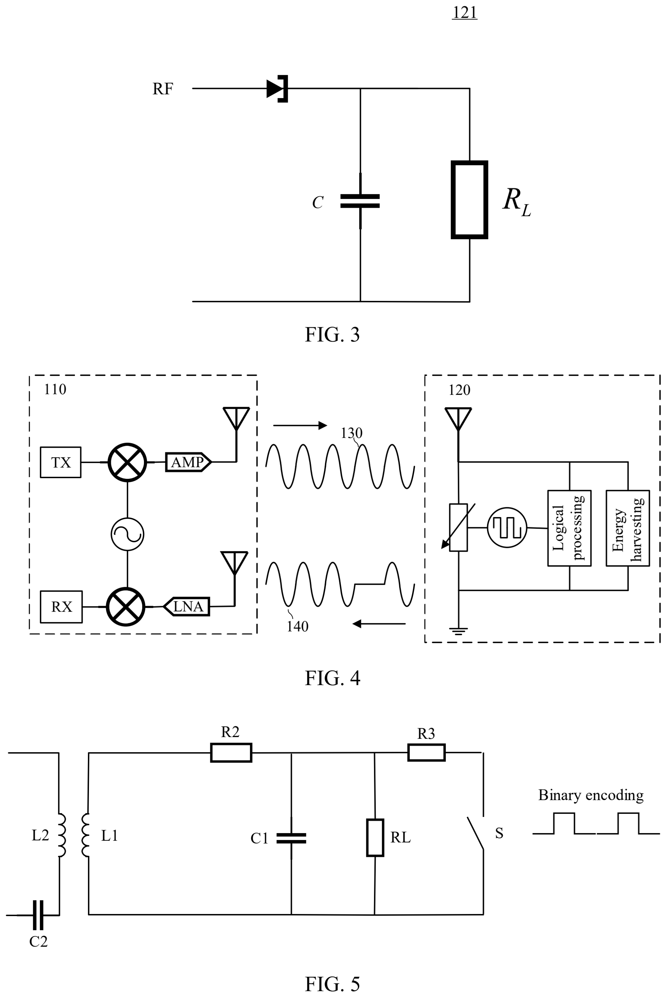

FIG. 3 shows a possible structure of the energy harvesting module 121. As shown in FIG. 3, the energy harvesting module 121 may harvest energy of a spatial electromagnetic wave of a radio frequency signal based on an electromagnetic induction principle, and store harvested energy in a capacitor C. The foregoing process may be understood as a process of charging the capacitor C. After the process of charging the capacitor C ends, the capacitor C may start to discharge, to supply energy to the zero-power terminal 120. For example, the capacitor C discharges to drive the zero-power terminal 120 to perform low-power demodulation on data transmitted by the network device 110. For another example, the capacitor C discharges to drive the zero-power terminal 120 to modulate data to be transmitted. For another example, the capacitor C discharges to drive a sensor of the zero-power terminal 120 to collect data. For another example, the capacitor C discharges to drive the zero-power terminal 120 to read data in a memory, or the like.

The backscatter communications module 122 may be configured for the zero-power terminal 120 to perform backscatter communication with the network device 110. A backscatter communication principle is described below with reference to FIG. 4. Referring to FIG. 4, the zero-power terminal 120 receives a wireless signal 130 transmitted by the network device 110, and modulates the wireless signal 130 to load data to be transmitted. Finally, the zero-power terminal 120 radiates a modulated signal 140 from an antenna. This information transmission process is referred to as backscatter communication. The wireless signal 130 may also be referred to as a carrier signal. The carrier signal may refer to a wireless signal that is not modulated. The carrier signal may be, for example, a sine wave signal. The backscatter communication is inseparable from a load modulation function. The load modulation function may be understood as adjusting and controlling a circuit parameter of an oscillation loop of the zero-power terminal 120 based on a beat of a data stream, such that parameters such as magnitude of impedance of the zero-power terminal 120 change accordingly, thereby completing a modulation process.

In some implementations, another component, for example, an amplifier (amplifier, AMP), may be further disposed on a transport (transport, TX) path of the network device 110, and is configured to process a signal to be transmitted. Another component, for example, a low noise amplifier (low noise amplifier, LNA), may be further disposed on a receive (receive, RX) path of the network device 110, and is configured to process a received signal.

Generally, the load modulation function may be implemented in two manners: resistive load modulation and capacitive load modulation. FIG. 5 shows a diagram of a circuit of a zero-power terminal based on a resistive load modulation technology. It should be noted that a manner in which the circuit in FIG. 5 implements the load modulation technology is similar to a manner in which an existing circuit implements the load modulation technology. For brevity, functions of resistors R2 and R3, capacitors C1 and C2, and inductors L1 and L2 included in the circuit in FIG. 5 are not described again.

In resistive load modulation, a resistor RL may be connected in parallel to a load. A switch S may switch on/off of the resistor RL based on control of a binary data stream. In this way, on/off of the resistor RL causes a change in a voltage of the circuit, and the change in the voltage of the circuit may control amplitude of a backscatter signal from the zero-power terminal, so as to implement modulation of the backscatter signal, namely, amplitude-shift keying (amplitude-shift keying, ASK) modulation of the backscatter signal.

Similarly, in capacitive load modulation, on/off of a capacitor may be controlled based on a binary data stream, to change a resonance frequency of the circuit, thereby changing a working frequency of the backscatter signal, and implementing frequency-shift keying (frequency-shift keying, FSK) modulation.

As described above, the zero-power terminal may perform information modulation on an incident wave (namely, a carrier signal) in a manner of load modulation, to implement a backscatter communication process. Therefore, a zero-power terminal in backscatter communication generally has the following advantages:
Advantage 1: Because the zero-power terminal is unnecessary to actively transmit a signal, it is unnecessary to construct a complex radio frequency path for the zero-power terminal. For example, components such as a power amplifier (power amplifier, PA) and a radio frequency filter may not be provided in the radio frequency path, so as to reduce costs and a volume of the terminal device.
Advantage 2: Because the zero-power terminal is unnecessary to actively generate a high-frequency signal, it is unnecessary to configure a high-frequency crystal oscillator for the zero-power terminal, thereby reducing costs and a volume of the terminal device.
Advantage 3: Because the zero-power terminal may communicate with the network device by using a backscatter technology, less energy is consumed by the zero-power terminal, or even no energy of the zero-power terminal is consumed during communication.

### Encoding scheme of a zero-power terminal

**In** data transmitted by an encoding end (for example, a terminal or an electronic tag), "1" and "0" in the binary system may be represented by using different encoding schemes. Correspondingly, a decoding end (for example, a network device or a radio frequency identification system) may decode, by using a corresponding decoding scheme, a bit stream transmitted by the encoding end. Commonly-used encoding methods in zero-power communications technologies include: NRZ encoding, Manchester (manchester) encoding, unipolar return-to-zero (unipolar RZ) encoding, DBP encoding, Miller (miller) encoding, differential encoding, and the like.

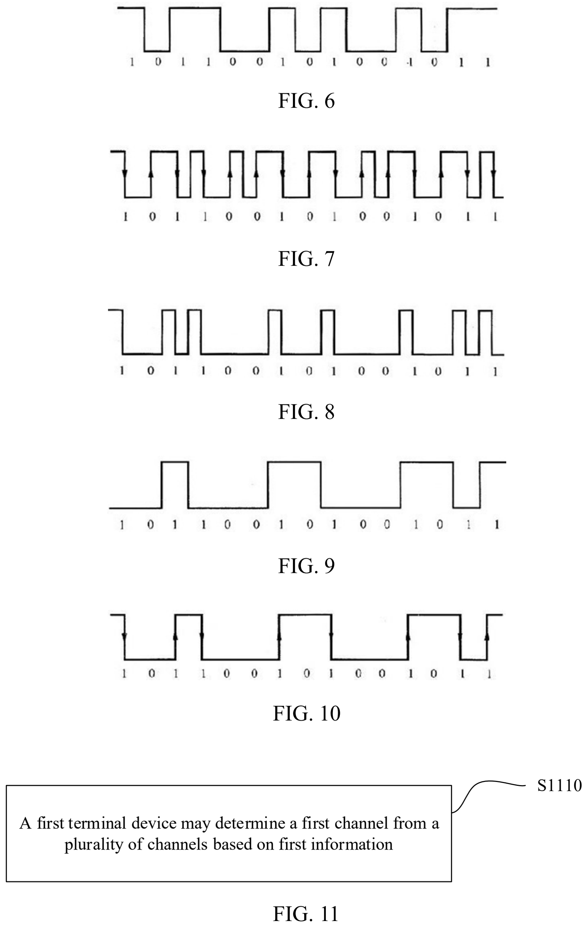

FIG. 6 is a schematic diagram of an encoding scheme of NRZ encoding. It may be learned from FIG. 6 that in the NRZ encoding, a high level is used to represent a binary bit "1" and a low level is used to represent a binary bit "0".

FIG. 7 is a schematic diagram of an encoding scheme of Manchester encoding. The Manchester encoding is also referred to as split-phase coding (split-phase coding). Referring to FIG. 7, in Manchester encoding, a value of a bit is represented by a level change (rising/falling) at half a bit period of a bit length. A negative transition at half a bit period represents a binary bit "1", and a positive transition at half a bit period represents a binary bit "0". In some implementations, Manchester encoding is commonly used for data transmission from an electronic tag to a reader, because this is beneficial for detecting an error in data transmission. A "no change" state in the bit length is not allowed. When data bits simultaneously transmitted by a plurality of electronic tags have different values, a received rising edge and a received falling edge cancel each other. As a result, a carrier signal is uninterrupted in the entire bit length. Because this state is not allowed, the reader may determine, by using this error, a specific location at which a collision occurs.

FIG. 8 is a schematic diagram of an encoding scheme of unipolar return-to-zero encoding. Referring to FIG. 8, in unipolar return-to-zero encoding, a high level in a first half of a bit period represents a binary bit "1", and a low level signal that lasts in an entire bit period represents a binary bit "0". In some implementations, the unipolar return-to-zero encoding may be used to extract a bit synchronization signal.

FIG. 9 is a schematic diagram of an encoding scheme of DBP encoding. Referring to FIG. 9, in differential binary phase encoding, any edge within half a bit period represents a binary bit "0", while absence of an edge represents a binary bit "1". In addition, a level is inverted at the beginning of each bit period. Therefore, a bit beat is relatively easy to be reconstructed for a receiver.

FIG. 10 is a schematic diagram of an encoding scheme of Miller encoding. Referring to FIG. 10, in Miller encoding, any edge within half a bit period represents a binary bit "1", and a level that maintains unchanged until an end of a next bit period represents a binary bit "0". Level alternation occurs at the beginning of a bit period, so that a bit beat is relatively easy to be reconstructed for a receiver.

In addition, there is an encoding scheme of differential encoding. In differential encoding, each binary bit "1" to be transmitted causes a change in signal level, while for a binary bit "0", the signal level remains unchanged.

### Classification of zero-power terminals

Zero-power terminals may be classified into three categories based on their energy storage capabilities and whether they have a capability to generate an RF signal for signal transmission. The first category may be referred to as Device A (Device A), the second category may be referred to as Device B (Device B), and the third category may be referred to as Device C (Device C).

Device A does not have an energy storage function, does not have independent signal generation and signal amplification functions, and can perform signal transmission by relying only on backscatter communication.

Device B has the energy storage function, but cannot generate a signal independently, and can perform signal transmission by using only backscatter. Energy stored by Device B may be used to amplify a backscatter signal.

Device C has the energy storage function. In addition, Device C can generate a signal independently, that is, Device C may actively transmit a signal.

In some common scenarios, before obtaining energy, a terminal device cannot receive any signal transmitted by a network device. If a plurality of channels are deployed in a system, the terminal device cannot determine a channel among the plurality of channels through which the network device intends to communicate with the terminal device. Therefore, how to determine a channel on which the terminal device should transmit and receive a signal to interact with the network device is a problem to be resolved.

For example, in a zero-power network, the terminal device needs to collect a radio wave transmitted by the network device to obtain energy, so as to drive the terminal device to operate. Therefore, before obtaining energy, the zero-power terminal is in a "shutdown" state, that is, at this time, the zero-power terminal cannot receive any signal transmitted by the network device. Therefore, when a plurality of channels are deployed in a system, after a zero-power terminal obtains energy via energy harvesting and is "activated", the terminal device may operate on any one of these channels. The network device generally communicates with the zero-power terminal on only one of these channels. In this case, how to determine a channel on which the zero-power terminal should transmit and receive a signal to perform information interaction with the network device is a problem to be resolved.

To resolve the foregoing problem, first information is introduced in embodiments of this application. Referring to step S1110 in FIG. 11, a first terminal device may determine a first channel from a plurality of channels based on the first information. The first information may include (or be used to indicate, or be used to determine) one or more of the following: weight parameters of the plurality of channels (for detailed description, refer to Embodiment 1 below); a first identity associated with the first terminal device (for details, refer to Embodiment 1, Embodiment 2, or Embodiment 4 below); a first channel group to which the first terminal device belongs (for detailed description, refer to Embodiment 2 below); or first indication information transmitted by a network device (for detailed description, one may refer to Embodiment 3 below). Introduction of the first information is beneficial to reducing a collision probability when different terminal devices use channels, thereby reducing interference between the plurality of terminal devices.

In some embodiments, the first terminal device may receive a trigger signal before performing step S1110; or the first terminal device may receive a trigger signal after performing step S1110. The trigger signal may be used to trigger the first terminal device to perform backscatter communication. The trigger signal may be, for example, a wireless energy supply signal or a downlink communication signal.

In some embodiments, the first terminal device may refer to a zero-power terminal. The zero-power terminal may be one of Device A, Device B, or Device C mentioned in the section "Classification of zero-power terminals". For example, the zero-power terminal may not have the energy storage function, may not have the independent signal generation and signal amplification functions, and can perform signal transmission by relying only on backscatter communication. For another example, the zero-power terminal may have the energy storage function, but cannot generate a signal independently, and can perform signal transmission by using only backscatter. Energy stored by the zero-power terminal may be used to amplify a backscatter signal. For another example, the zero-power terminal may generate a signal independently, that is, the zero-power terminal may actively transmit a signal. In an example, the zero-power terminal may be a radio frequency identification (Radio Frequency Identification, RFID) tag. Correspondingly, the network device may be an RFID reader.

In some embodiments, the plurality of channels may refer to a plurality of channels supported by a current cell of the first terminal device (the current cell mentioned in various embodiments of this application may refer to or be replaced with a current serving cell). The current cell may also be referred to as a multi-channel cell.

In some embodiments, the plurality of channels may be downlink channels, or may be uplink channels.

In some embodiments, the plurality of channels may include a channel located in a band (inband) and/or a channel located in a guard band (guardband). The zero-power terminal is used as an example. If communications bands of the zero-power terminal adopt inband+guardband configuration, the plurality of channels may include a channel in a band (also referred to as an inband channel) and a channel located in a guard band (also referred to as a guardband channel).

In some embodiments, the plurality of channels may include a same quantity or different quantities of communication resources (for example, unicast communication resources). In other words, the plurality of channels may have a same load capacity or different load capacities.

In some embodiments, a quantity of the plurality of channels may be a pre-defined value. The first terminal device being a zero-power terminal is used as an example. The quantity of the plurality of channels may be determined based on a spectrum supported by the zero-power terminal.

In some embodiments, the quantity of the plurality of channels may be stored in advance by the first terminal device. The first terminal device being a zero-power terminal is used as an example. The quantity of the plurality of channels may be a numerical value written into a tag after the zero-power terminal leaves the factory or is activated.

In some embodiments, the quantity of the plurality of channels may be indicated to the first terminal device by the network device. For example, the network device may notify the terminal device of the quantity of the plurality of channels in a broadcast manner.

In some embodiments, the plurality of channels may be classified based on frequency division. In this case, the plurality of channels may be referred to as frequency division multiplexing (frequency division multiplexing, FDM) channels. For example, the current cell supports a plurality of channels, and the plurality of channels correspond to different frequencies (or center frequencies). Further, in some embodiments, the plurality of channels may not overlap with each other in frequency domain.

In some embodiments, the plurality of channels may be classified based on time division. In this case, the plurality of channels may be referred to as time division multiplexing (time division multiplexing, TDM) channels. For example, the current cell supports a plurality of channels, and the plurality of channels correspond to different time domain locations.

In some embodiments, the plurality of channels may be classified based on code division or space division.

In some embodiments, the first channel may be used by the first terminal device to communicate with the network device. For example, the first channel may be used by the first terminal device to perform channel monitoring/reception (in this case, the first channel is a downlink channel). For another example, the first channel may be used by the first terminal device to perform signal transmitting (in this case, the first channel is an uplink channel).

The first information described above may be any type of information based on which the first terminal device determines the first channel from the plurality of channels. Content of the first information is described exemplarily in detail with reference to multiple embodiments.

### Embodiment 1: The first information including the weight parameters of the plurality of channels

In some embodiments, the weight parameters of the plurality of channels may also be referred to as weight factors of the plurality of channels.

In some embodiments, the weight parameters of the plurality of channels may be used to control distribution ratios of terminal devices on the plurality of channels. For example, a greater value of the weight parameter (or a greater weight factor) of a channel indicates that a greater quantity of terminal devices can select this channel, or indicates that this channel can accommodate a greater quantity of terminal devices.

Embodiment 1 introduces the weight parameters of the plurality of channels in consideration of that resource loads on different channels may be different. Zero-power communication is used as an example. In a case of inband+guardband configuration, a quantity of resources on an inband channel that are available for zero-power communication may be different from a quantity of resources on a guard band channel that are available for zero-power communication. Alternatively, if system information is transmitted on only some of the plurality of channels, quantities of resources on different channels that are available for unicast communication may be different. In this case, a channel determining manner provided in Embodiment 1 is beneficial for the network device to control load distribution on different channels based on actual conditions.

In some embodiments, values of the weight parameters of the plurality of channels may be values stored in advance by the first terminal device. The first terminal device being a zero-power terminal is used as an example. The weight parameters of the plurality of channels may be numerical values written into a tag after the zero-power terminal leaves the factory or is activated.

In some embodiments, the values of the weight parameters of the plurality of channels may be pre-defined values. The first terminal device being a zero-power terminal is used as an example. A numerical value may be pre-defined for each channel in a spectrum supported by the zero-power terminal, and may be used as a weight parameter of the respective channel.

In some embodiments, the values of the weight parameters of the plurality of channels may be indicated to the first terminal device by the network device. For example, the network device may notify the terminal device of the weight parameters of the plurality of channels in a broadcast manner.

In some embodiments, the first channel may be determined from the plurality of channels based only on the weight parameters of the plurality of channels. For example, a channel whose weight parameter has the greatest value may be determined as the first channel.

In some embodiments, the first channel may be determined based on the weight parameters of the plurality of channels and second information. The second information may include at least one of the following: a first identity associated with the first terminal device; or a quantity of the plurality of channels.

In some embodiments, the first identity may include one or more of the following identities: a tag identity (Tag ID) of the first terminal device; a service identity (Service ID) of the first terminal device; or a group identity (Group ID) of a terminal device group to which the first terminal device belongs.

For example, the first terminal device may be a zero-power device; the first identity may be a Tag ID of a tag of the zero-power device; and the Tag ID may be an identity written into the tag after the tag leaves the factory or is activated, or may be a short number identity that represents the tag.

For another example, the first terminal device may be a zero-power device; the first identity is a Service ID of a tag of the zero-power device; and the Service ID may be an identity written into the tag after the tag leaves the factory or is activated.

For another example, the first terminal device may be a zero-power device; the first identity is a Group ID of a tag of the zero-power device; and the Group ID may be an identity written into the tag after the tag leaves the factory or is activated.

In some embodiments, when the first channel is determined based on the first identity and the weight parameter, a type of the first identity may be determined based on a type of the trigger signal received by the first terminal device. The trigger signal herein may be a signal used to trigger the first terminal device to perform backscatter communication. For example, the trigger signal may be a wireless energy supply signal or a downlink communication signal transmitted by the network device.

For example, if the trigger signal is a trigger signal for a single terminal device, the first identity may be the Tag ID of the first terminal device.

For another example, if the trigger signal is a trigger signal for a service, the first identity may be the Service ID of the first terminal device.

For another example, if the trigger signal is a trigger signal for a terminal device group, the first identity may be the Group ID of the terminal device group to which the first terminal device belongs.

In some embodiments, the first channel may be determined based on the weight parameter, the second information, and a first rule.

In some embodiments, the first rule may be associated with a multiple access mode supported by the current cell.

In some embodiments, the first rule may be associated with a multiplexing mode supported by the current cell.

In some embodiments, the first rule may be associated with a multiple access mode, a multiplexing mode, or a division mode of the plurality of channels.

For example, if the current cell supports only a frequency division multiple access mode, the first rule is: selecting a channel based on the frequency division multiple access mode.

For another example, if the current cell supports only a frequency division multiplexing mode, the first rule is: selecting a channel based on the frequency division multiplexing mode.

For another example, if the plurality of channels support only a frequency division multiplexing mode, the first rule is: selecting a channel based on the frequency division multiplexing mode.

For another example, if the current cell supports a frequency division multiple access mode and another multiple access mode, and the frequency division multiple access mode takes precedence, the first rule is: first selecting a channel based on the frequency division multiple access mode, and then selecting a channel based on the another multiple access mode.

For another example, if the current cell supports a frequency division multiplexing mode and another multiplexing mode, and the frequency division multiplexing mode takes precedence, the first rule is: first selecting a channel based on the frequency division multiplexing mode, and then selecting a channel based on the another multiplexing mode.

For another example, if the plurality of channels support a frequency division multiplexing mode and another multiplexing mode, and the frequency division multiplexing mode takes precedence, the first rule is: first selecting a channel based on the frequency division multiplexing mode, and then selecting a channel based on the another multiplexing mode.

For another example, if the current cell supports a frequency division multiple access mode and another multiple access mode, and the another multiple access mode takes precedence, the first rule is: first selecting a channel based on the another multiple access mode, and then selecting a channel based on the frequency division multiple access mode.

For another example, if the current cell supports a frequency division multiplexing mode and another multiplexing mode, and the another multiplexing mode takes precedence, the first rule is: first selecting a channel based on the another multiplexing mode, and then selecting a channel based on the frequency division multiplexing mode.

For another example, if the plurality of channels support a frequency division multiplexing mode and another multiplexing mode, and the another multiplexing mode takes precedence, the first rule is: first selecting a channel based on the another multiplexing mode, and then selecting a channel based on the frequency division multiplexing mode.

In some embodiments, the first rule is associated with the first identity and a first parameter. The first parameter is a sum of the values of the weight parameters of the plurality of channels. In other words, the first channel is determined based on the first identity and the first parameter.

In some embodiments, the first rule is associated with a quotient of the first identity and a first parameter. The first parameter is a sum of the values of the weight parameters of the plurality of channels. In other words, the first channel is determined based on the quotient of the first identity and the first parameter.

For ease of understanding, the following provides several more specific embodiments for determining the first channel based on the weight parameters of the plurality of channels.

### Embodiment 1.1:

In Embodiment 1.1, the first terminal device first determines the first channel from the plurality of channels based on the Tag ID. Then, the first terminal device receives a trigger signal for a single terminal device on the first channel. Further, in Embodiment 1.1, the current cell supports only a channel selection mode based on frequency division multiplexing. Alternatively, the current cell supports a channel selection mode based on a combination of frequency division multiplexing and another multiplexing mode (for example, time division multiplexing), and the channel selection mode based on frequency division multiplexing takes precedence. In other words, in channel selection, frequency domain mapping is performed first based on frequency division multiplexing, and then mapping in another domain (for example, time domain) is performed based on the another multiplexing mode. Further, in Embodiment 1.1, the current cell supports N channels; the N channels correspond to different frequencies; and indexes (index) of the N channels are sequentially numbered (for example, in an ascending order of the frequencies), and are denoted as 0 to N-1.

The index of the first channel determined by the first terminal device from the plurality of channels is a minimum index n (0 ≤ n < N) meeting the following condition or rule (corresponding to the first rule described above): Tag ID mod W < W(0) + W(1) + ... + W(n).

In the foregoing formula, W is a sum of values of weight parameters of the N channels, that is, W = W(0) + W(1) + ... + W(N-1), where W(n) denotes the value of the weight parameter of the n^{th} channel of the N channels; and the "mod" denotes a remainder operation.

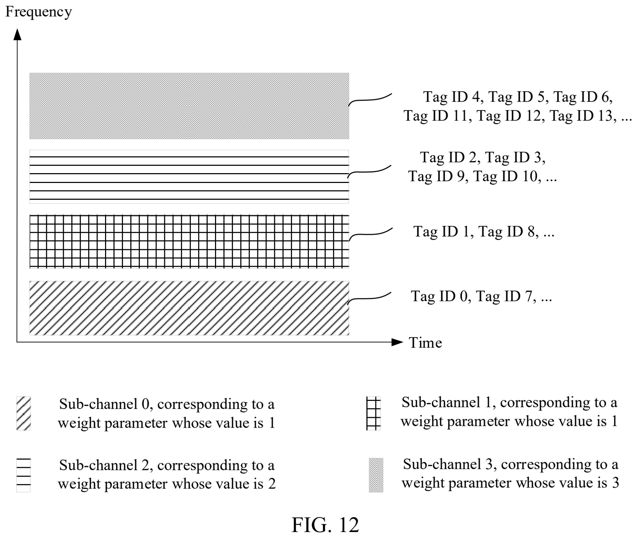

In a more specific example, it is assumed that the current cell supports only the frequency division multiplexing mode, that the current cell supports four sub-channels in frequency domain, and that values of weight parameters of the sub-channels (a sub-channel 0, a sub-channel 1, a sub-channel 2, and a sub-channel 3) are 1, 1, 2, and 3, respectively. A mapping relationship between the Tag ID of the first terminal device and the first channel determined by the first terminal device is shown in FIG. 12.

### Embodiment 1.2:

In Embodiment 1.2, the first terminal device first determines the first channel from the plurality of channels based on the Tag ID. Then, the first terminal device receives a trigger signal for a single terminal device on the first channel. Further, in Embodiment 1.2, the current cell supports a channel selection mode based on a combination of frequency division multiplexing and another multiplexing mode (for example, time division multiplexing), and the channel selection mode based on the another multiplexing mode takes precedence. In other words, in channel selection, mapping in another domain (for example, time domain) is performed first based on the another multiplexing mode, and then frequency domain mapping is performed based on frequency division multiplexing. In addition, before frequency domain mapping, a quantity of terminal devices that performs mapping based on the another multiplexing mode is M (that is, a multiplexing factor of the another multiplexing mode is M). Further, in Embodiment 1.2, the current cell supports N channels; the N channels correspond to different frequencies; and indexes (index) of the N channels are sequentially numbered (for example, in an ascending order of the frequencies), and are denoted as 0 to N-1.

The index of the first channel determined by the first terminal device from the plurality of channels is a minimum index n (0 ≤ n < N) meeting the following condition or rule (corresponding to the first rule described above): floor(Tag ID/M) mod W < W(0) + W(1) + ... + W(n).

In the foregoing formula, W is a sum of values of weight parameters of the N channels, that is, W = W(0) + W(1) + ... + W(N-1), where W(n) denotes the value of the weight parameter of the n^{th} channel of the N channels; the "mod" denotes a remainder operation; and the "floor" denotes a rounding down operation.

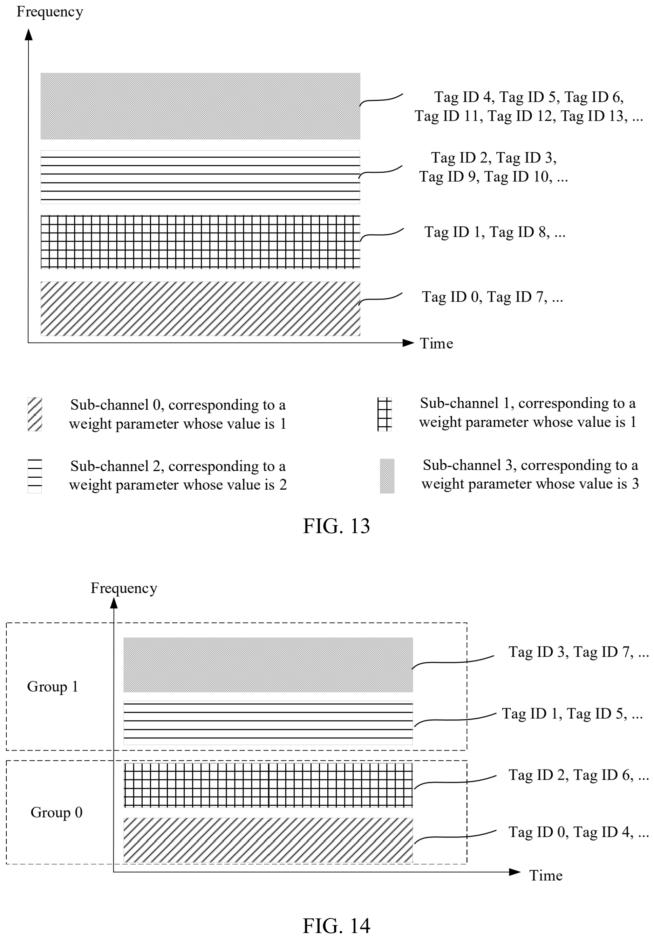

In a more specific example, the current cell supports two multiplexing modes: frequency division multiplexing and time division multiplexing. In channel selection, channel selection based on frequency division multiplexing is performed first, and then channel selection based on time division multiplexing is performed, where a time domain multiplexing factor is 4. The current cell supports four channels in frequency domain; values of weight parameters of the four channels (a sub-channel 0, a sub-channel 1, a sub-channel 2, and a sub-channel 3) are 1, 1, 2, and 3, respectively; and a mapping relationship between the Tag ID of the first terminal device and the first channel determined by the first terminal device is shown in FIG. 13.

### Embodiment 1.3:

In Embodiment 1.3, the first terminal device first determines the first channel from the plurality of channels based on the Service ID. Then, the first terminal device receives a trigger signal for a service on the first channel. Further, in Embodiment 1.3, the current cell supports only a channel selection mode based on frequency division multiplexing. Alternatively, the current cell supports a channel selection mode based on a combination of frequency division multiplexing and another multiplexing mode (for example, time division multiplexing), and the channel selection mode based on frequency division multiplexing takes precedence. In other words, in channel selection, frequency domain mapping is performed first based on frequency division multiplexing, and then mapping in another domain (for example, time domain) is performed based on the another multiplexing mode. Further, in Embodiment 1.3, the current cell supports N channels; the N channels correspond to different frequencies; and indexes (index) of the N channels are sequentially numbered (for example, in an ascending order of the frequencies), and are denoted as 0 to N-1.

The index of the first channel determined by the first terminal device from the plurality of channels is a minimum index n (0 ≤ n < N) meeting the following condition or rule (corresponding to the first rule described above): Service ID mod W < W(0) + W(1) + ... + W(n).

In the foregoing formula, W is a sum of values of weight parameters of the N channels, that is, W = W(0) + W(1) + ... + W(N-1), where W(n) denotes the value of the weight parameter of the n^{th} channel of the N channels; and the "mod" denotes a remainder operation.

### Embodiment 1.4:

In Embodiment 1.4, the first terminal device first determines the first channel from the plurality of channels based on the Service ID. Then, the first terminal device receives a trigger signal for a service on the first channel. Further, in Embodiment 1.4, the current cell supports a channel selection mode based on a combination of frequency division multiplexing and another multiplexing mode (for example, time division multiplexing), and the channel selection mode based on the another multiplexing mode takes precedence. In other words, in channel selection, mapping in another domain (for example, time domain) is performed first based on the another multiplexing mode, and then frequency domain mapping is performed based on frequency division multiplexing. In addition, before frequency domain mapping, a quantity of terminal devices that performs mapping based on the another multiplexing mode is M (that is, a multiplexing factor of the another multiplexing mode is M). Further, in Embodiment 1.4, the current cell supports N channels; the N channels correspond to different frequencies; and indexes (index) of the N channels are sequentially numbered (for example, in an ascending order of the frequencies), and are denoted as 0 to N-1.

The index of the first channel determined by the first terminal device from the plurality of channels is a minimum index n (0 ≤ n < N) meeting the following condition or rule (corresponding to the first rule described above): floor(Service ID/M) mod W < W(0) + W(1) + ... + W(n).

In the foregoing formula, W is a sum of values of weight parameters of the N channels, that is, W = W(0) + W(1) + ... + W(N-1), where W(n) denotes the value of the weight parameter of the n^{th} channel of the N channels; the "mod" denotes a remainder operation; and the "floor" denotes a rounding down operation.

### Embodiment 1.5:

In Embodiment 1.5, the first terminal device first determines the first channel from the plurality of channels based on the Group ID. Then, the first terminal device receives a trigger signal for a terminal device group on the first channel. Further, in Embodiment 1.5, the current cell supports only a channel selection mode based on frequency division multiplexing. Alternatively, the current cell supports a channel selection mode based on a combination of frequency division multiplexing and another multiplexing mode (for example, time division multiplexing), and the channel selection mode based on frequency division multiplexing takes precedence. In other words, in channel selection, frequency domain mapping is performed first based on frequency division multiplexing, and then mapping in another domain (for example, time domain) is performed based on the another multiplexing mode. Further, in Embodiment 1.5, the current cell supports N channels; the N channels correspond to different frequencies; and indexes (index) of the N channels are sequentially numbered (for example, in an ascending order of the frequencies), and are denoted as 0 to N-1.

The index of the first channel determined by the first terminal device from the plurality of channels is a minimum index n (0 ≤ n < N) meeting the following condition or rule (corresponding to the first rule described above): Group ID mod W < W(0) + W(1) + ... + W(n).

In the foregoing formula, W is a sum of values of weight parameters of the N channels, that is, W = W(0) + W(1) + ... + W(N-1), where W(n) denotes the value of the weight parameter the n^{th} channel of the N channels; and the "mod" denotes a remainder operation.

### Embodiment 1.6:

In Embodiment 1.6, the first terminal device first determines the first channel from the plurality of channels based on the Group ID. Then, the first terminal device receives a trigger signal for a terminal device group on the first channel. Further, in Embodiment 1.6, the current cell supports a channel selection mode based on a combination of frequency division multiplexing and another multiplexing mode (for example, time division multiplexing), and the channel selection mode based on the another multiplexing mode takes precedence. In other words, in channel selection, mapping in another domain (for example, time domain) is performed first based on the another multiplexing mode, and then frequency domain mapping is performed based on frequency division multiplexing. In addition, before frequency domain mapping, a quantity of terminal devices that performs mapping based on the another multiplexing mode is M (that is, a multiplexing factor of the another multiplexing mode is M). Further, in Embodiment 1.6, the current cell supports N channels; the N channels correspond to different frequencies; and indexes (index) of the N channels are sequentially numbered (for example, in an ascending order of the frequencies), and are denoted as 0 to N-1.

The index of the first channel determined by the first terminal device from the plurality of channels is a minimum index n (0 ≤ n < N) meeting the following condition or rule (corresponding to the first rule described above): floor(Group ID/M) mod W < W(0) + W(1) + ... + W(n).

In the foregoing formula, W is a sum of values of weight parameters of the N channels, that is, W = W(0) + W(1) + ... + W(N-1), where W(n) denotes the value of the weight parameter of the n^{th} channel of the N channels; the "mod" denotes a remainder operation; and the "floor" denotes a rounding down operation.

### Embodiment 2: The first information including the first channel group to which the first terminal device belongs

The plurality of channels supported by the current cell may belong to a plurality of channel groups. The first channel group may be one of the plurality of channel groups. The first channel group may be selected by the first terminal device from the plurality of channel groups. In other words, the following two-stage channel selection mechanism may be introduced: the first terminal device first selects the first channel group, and then selects the first channel from the first channel group. According to the two-stage channel selection mechanism, different terminal devices can select channels (or sub-carriers) with larger frequency domain spacing, thereby beneficial to reducing interference between different channels.

In some embodiments, the plurality of channels may be divided into a plurality of channel groups, where quantities of channels included in different channel groups may be the same or may be different.

In some embodiments, mapping relationships between channels and channel groups may be configured by the network device. For example, the network device may explicitly indicate the mapping relationships between the channels and the channel groups in a broadcast manner.

In some embodiments, every K channels of the plurality of channels may be grouped into a channel group. For example, every K channels that are consecutive in frequency domain may be grouped into a channel group in a specific order (for example, an ascending order in frequency domain or a descending order in frequency domain).

The following describes in detail how to determine a first channel group from a plurality of channel groups.

In some embodiments, the first channel group is determined based on fourth information, and the fourth information includes at least one of the following: the first identity; or a quantity of channel groups included in the current cell.

In some embodiments, the first identity includes at least one of the following: the Tag ID of the first terminal device; or the Service ID of the first terminal device.

In some embodiments, the first channel group is determined based on the fourth information and a third rule; and the third rule is associated with a multiple access mode supported by the current cell.

In some embodiments, the first channel group is determined based on the fourth information and a third rule; and the third rule is associated with a multiplexing mode supported by the current cell.

In some embodiments, the first channel group is determined based on the fourth information and a third rule; and the third rule is associated with a multiple access mode, a multiplexing mode, or a division mode of the plurality of channels.

For example, if the current cell supports only a frequency division multiple access mode, the third rule is: selecting a channel group based on the frequency division multiple access mode.

For another example, if the current cell supports only a frequency division multiplexing mode, the third rule is: selecting a channel group based on the frequency division multiplexing mode.

For another example, if the plurality of channels support only a frequency division multiplexing mode, the third rule is: selecting a channel group based on the frequency division multiplexing mode.

For another example, if the current cell supports a frequency division multiple access mode and another multiple access mode, and the frequency division multiple access mode takes precedence, the third rule is: first selecting a channel group based on the frequency division multiple access mode, and then selecting a channel group based on the another multiple access mode.

For another example, if the current cell supports a frequency division multiplexing mode and another multiplexing mode, and the frequency division multiplexing mode takes precedence, the third rule is: first selecting a channel group based on the frequency division multiplexing mode, and then selecting a channel group based on the another multiplexing mode.

For another example, if the plurality of channels support a frequency division multiplexing mode and another multiplexing mode, and the frequency division multiplexing mode takes precedence, the third rule is: first selecting a channel group based on the frequency division multiplexing mode, and then selecting a channel group based on the another multiplexing mode.

For another example, if the current cell supports a frequency division multiple access mode and another multiple access mode, and the another multiple access mode takes precedence, the third rule is: first selecting a channel group based on the another multiple access mode, and then selecting a channel group based on the frequency division multiple access mode.

For another example, if the current cell supports a frequency division multiplexing mode and another multiplexing mode, and the another multiplexing mode takes precedence, the third rule is: first selecting a channel group based on the another multiplexing mode, and then selecting a channel group based on the frequency division multiplexing mode.

For another example, if the plurality of channels support a frequency division multiplexing mode and another multiplexing mode, and the another multiplexing mode takes precedence, the third rule is: first selecting a channel group based on the another multiplexing mode, and then selecting a channel group based on the frequency division multiplexing mode.

For ease of understanding, the following provides several more specific embodiments for determining the first channel from the first channel group.

### Embodiment 2.1:

In Embodiment 2.1, the plurality of channel groups include L channel groups; and indexes (index) of the L channel groups are sequentially numbered (for example, in an ascending order of frequencies), and are denoted as 0 to L-1. In addition, in Embodiment 2.1, the first terminal device determines the first channel group based on the Tag ID. Further, in Embodiment 2.1, the current cell supports only a channel group selection mode based on frequency division multiplexing. Alternatively, the current cell supports a channel group selection mode based on a combination of frequency division multiplexing and another multiplexing mode (for example, time division multiplexing), and the channel group selection mode based on frequency division multiplexing takes precedence. In other words, in channel group selection, frequency domain mapping is performed first based on frequency division multiplexing, and then mapping in another domain (for example, time domain) is performed based on the another multiplexing mode.

The index of the first channel group determined by the first terminal device from the plurality of channel groups meets the following condition or rule (corresponding to the third rule described above): group index = Tag ID mod L. In the foregoing formula, the "group index" is the index of the first channel group. The "mod" denotes a remainder operation.

### Embodiment 2.2:

In Embodiment 2.2, the plurality of channel groups include L channel groups; and indexes (index) of the L channel groups are sequentially numbered (for example, in an ascending order of frequencies), and are denoted as 0 to L-1. In addition, in Embodiment 2.2, the first terminal device determines the first channel group based on the Tag ID. Further, in Embodiment 2.2, the current cell supports a channel group selection mode based on a combination of frequency division multiplexing and another multiplexing mode (for example, time division multiplexing), and the channel group selection mode based on the another multiplexing mode takes precedence. In other words, in channel group selection, mapping in another domain (for example, time domain) is performed first based on the another multiplexing mode, and then frequency domain mapping is performed based on frequency division multiplexing. In addition, before frequency domain mapping, a quantity of terminal devices that performs mapping based on the another multiplexing mode is M (that is, a multiplexing factor of the another multiplexing mode is M).

The index of the first channel group determined by the first terminal device from the plurality of channel groups meets the following condition or rule (corresponding to the third rule described above): group index = floor(Tag ID/M) mod L. In the foregoing formula, the "group index" is the index of the first channel group. The "mod" denotes a remainder operation. The "floor" denotes a rounding down operation.

### Embodiment 2.3:

In Embodiment 2.3, the plurality of channel groups include L channel groups; and indexes (index) of the L channel groups are sequentially numbered (for example, in an ascending order of frequencies), and are denoted as 0 to L-1. In addition, in Embodiment 2.3, the first terminal device determines the first channel group based on the Service ID. Further, in Embodiment 2.3, the current cell supports only a channel group selection mode based on frequency division multiplexing. Alternatively, the current cell supports a channel group selection mode based on a combination of frequency division multiplexing and another multiplexing mode (for example, time division multiplexing), and the channel group selection mode based on frequency division multiplexing takes precedence. In other words, in channel group selection, frequency domain mapping is performed first based on frequency division multiplexing, and then mapping in another domain (for example, time domain) is performed based on the another multiplexing mode.

The index of the first channel group determined by the first terminal device from the plurality of channel groups meets the following condition or rule (corresponding to the third rule described above): group index = Service ID mod L. In the foregoing formula, the "group index" is the index of the first channel group. The "mod" denotes a remainder operation.

### Embodiment 2.4:

In Embodiment 2.4, the plurality of channel groups include L channel groups; and indexes (index) of the L channel groups are sequentially numbered (for example, in an ascending order of frequencies), and are denoted as 0 to L-1. In addition, in Embodiment 2.4, the first terminal device determines the first channel group based on the Service ID. Further, in Embodiment 2.4, the current cell supports a channel group selection mode based on a combination of frequency division multiplexing and another multiplexing mode (for example, time division multiplexing), and the channel group selection mode based on the another multiplexing mode takes precedence. In other words, in channel group selection, mapping in another domain (for example, time domain) is performed first based on the another multiplexing mode, and then frequency domain mapping is performed based on frequency division multiplexing. In addition, before frequency domain mapping, a quantity of terminal devices that may performs mapping based on the another multiplexing mode is M (that is, a multiplexing factor of the another multiplexing mode is M).

The index of the first channel group determined by the first terminal device from the plurality of channel groups meets the following condition or rule (corresponding to the third rule described above): group index = floor(Service ID/M) mod L. In the foregoing formula, the "group index" is the index of the first channel group. The "mod" denotes a remainder operation. The "floor" denotes a rounding down operation.

### Embodiment 2.5:

In some embodiments, the first channel group is determined based on mapping relationship information transmitted by the network device. The mapping relationship information may be used to indicate a mapping relationship between the first identity and the first channel group. For example, the network device may indicate the mapping relationship between the first identity and the first channel group to the first terminal device in a broadcast manner.

The foregoing describes in detail how to determine a first channel group from a plurality of channel groups. The following describes in detail with reference to embodiments how to determine a first channel from the first channel group.

In some embodiments, the first channel may be determined based on the first channel group and third information, and the third information may include at least one of the following: the first identity; or a quantity of channels included in the first channel group.

In some embodiments, the first identity includes at least one of the following: the Tag ID of the first terminal device; or the Service ID of the first terminal device.

In some embodiments, the first channel may be determined based on the first channel group, the third information, and a second rule; and the second rule is associated with a multiple access mode supported by the current cell.

In some embodiments, the first channel may be determined based on the first channel group, the third information, and a second rule; and the second rule is associated with a multiplexing mode supported by the current cell.

In some embodiments, the first channel may be determined based on the first channel group, the third information, and a second rule; and the second rule is associated with a multiple access mode, a multiplexing mode, or a division mode of the plurality of channels.

For example, if the current cell supports only a frequency division multiple access mode, the second rule is: selecting a channel based on the frequency division multiple access mode.

For another example, if the current cell supports only a frequency division multiplexing mode, the second rule is: selecting a channel based on the frequency division multiplexing mode.

For another example, if the plurality of channels support only a frequency division multiplexing mode, the second rule is: selecting a channel based on the frequency division multiplexing mode.

For another example, if the current cell supports a frequency division multiple access mode and another multiple access mode, and the frequency division multiple access mode takes precedence, the second rule is: first selecting a channel based on the frequency division multiple access mode, and then selecting a channel based on the another multiple access mode.

For another example, if the current cell supports a frequency division multiplexing mode and another multiplexing mode, and the frequency division multiplexing mode takes precedence, the second rule is: first selecting a channel based on the frequency division multiplexing mode, and then selecting a channel based on the another multiplexing mode.

For another example, if the plurality of channels support a frequency division multiplexing mode and another multiplexing mode, and the frequency division multiplexing mode takes precedence, the second rule is: first selecting a channel based on the frequency division multiplexing mode, and then selecting a channel based on the another multiplexing mode.

For another example, if the current cell supports a frequency division multiple access mode and another multiple access mode, and the another multiple access mode takes precedence, the second rule is: first selecting a channel based on the another multiple access mode, and then selecting a channel based on the frequency division multiple access mode.

For another example, if the current cell supports a frequency division multiplexing mode and another multiplexing mode, and the another multiplexing mode takes precedence, the second rule is: first selecting a channel based on the another multiplexing mode, and then selecting a channel based on the frequency division multiplexing mode.

For another example, if the plurality of channels support a frequency division multiplexing mode and another multiplexing mode, and the another multiplexing mode takes precedence, the second rule is: first selecting a channel based on the another multiplexing mode, and then selecting a channel based on the frequency division multiplexing mode.

For ease of understanding, the following provides several more specific embodiments for determining the first channel from the first channel group.

### Embodiment 2.6:

In Embodiment 2.6, the first terminal device determines the first channel from the first channel group based on the Tag ID of the first terminal device. The first channel group includes K channels; and indexes (index) of the K channels are sequentially numbered (for example, in an ascending order of frequencies), and are denoted as 0 to K-1. In addition, in Embodiment 2.6, the current cell supports only a channel selection mode based on frequency division multiplexing. Alternatively, the current cell supports a channel selection mode based on a combination of frequency division multiplexing and another multiplexing mode (for example, time division multiplexing), and the channel selection mode based on frequency division multiplexing takes precedence. In other words, in channel selection, frequency domain mapping is performed first based on frequency division multiplexing, and then mapping in another domain (for example, time domain) is performed based on the another multiplexing mode.

In some implementations, the index of the first channel determined by the first terminal device from the first channel group is determined based on the following formula: Tag ID mod K, where the "mod" denotes a remainder operation.

In some implementations, if the index of the first channel group is determined based on the Tag ID of the first terminal device, the index of the first channel is determined based on the following formula: floor(Tag ID/L) mod K; if the index of the first channel group is not determined based on the Tag ID of the first terminal device, the index of the first channel is determined based on the following formula: Tag ID mod K. The "floor" denotes a rounding down operation; L denotes the quantity of the channel groups; and the "mod" denotes a remainder operation.

### Embodiment 2.7:

In Embodiment 2.7, the first terminal device determines the first channel from the first channel group based on the Tag ID of the first terminal device. The first channel group includes K channels; and indexes (index) of the K channels are sequentially numbered (for example, in an ascending order of frequencies), and are denoted as 0 to K-1. In addition, in Embodiment 2.7, the current cell supports a channel selection mode based on a combination of frequency division multiplexing and another multiplexing mode (for example, time division multiplexing), and the channel selection mode based on the another multiplexing mode takes precedence. In other words, in channel selection, mapping in another domain (for example, time domain) is performed first based on the another multiplexing mode, and then frequency domain mapping is performed based on frequency division multiplexing. In addition, before frequency domain mapping, a quantity of terminal devices that performs mapping based on the another multiplexing mode is M (that is, a multiplexing factor of the another multiplexing mode is M).

In some implementations, the index of the first channel determined by the first terminal device from the first channel group is determined based on the following formula: floor(Tag ID/M) mod K, where the "floor" denotes a rounding down operation; and the "mod" denotes a remainder operation.

In some implementations, if the index of the first channel group is determined based on the Tag ID of the first terminal device, the index of the first channel is determined based on the following formula: floor(floor(Tag ID/M) /L) mod K; if the index of the first channel group is not determined based on the Tag ID of the first terminal device, the index of the first channel is determined based on the following formula: floor(Tag ID/M) mod K. The "floor" denotes a rounding down operation; L denotes the quantity of the channel groups; and the "mod" denotes a remainder operation.

### Embodiment 2.8:

In Embodiment 2.8, the first terminal device determines the first channel from the first channel group based on the Service ID of the first terminal device. The first channel group includes K channels; and indexes (index) of the K channels are sequentially numbered (for example, in an ascending order of frequencies), and are denoted as 0 to K-1. In addition, in Embodiment 2.8, the current cell supports only a channel selection mode based on frequency division multiplexing. Alternatively, the current cell supports a channel selection mode based on a combination of frequency division multiplexing and another multiplexing mode (for example, time division multiplexing), and the channel selection mode based on frequency division multiplexing takes precedence. In other words, in channel selection, frequency domain mapping is performed first based on frequency division multiplexing, and then mapping in another domain (for example, time domain) is performed based on the another multiplexing mode.

In some implementations, the index of the first channel determined by the first terminal device from the first channel group is determined based on the following formula: Service ID mod K, where the "mod" denotes a remainder operation.

In some implementations, if the index of the first channel group is determined based on the Service ID of the first terminal device, the index of the first channel is determined based on the following formula: floor(Service ID /L) mod K; if the index of the first channel group is not determined based on the Service ID of the first terminal device, the index of the first channel is determined based on the following formula: Service ID mod K. The "floor" denotes a rounding down operation; L denotes the quantity of the channel groups; and the "mod" denotes a remainder operation.

### Embodiment 2.9:

In Embodiment 2.9, the first terminal device determines the first channel from the first channel group based on the Service ID of the first terminal device. The first channel group includes K channels; and indexes (index) of the K channels are sequentially numbered (for example, in an ascending order of frequencies), and are denoted as 0 to K-1. In addition, in Embodiment 2.9, the current cell supports a channel selection mode based on a combination of frequency division multiplexing and another multiplexing mode (for example, time division multiplexing), and the channel selection mode based on the another multiplexing mode takes precedence. In other words, in channel selection, mapping in another domain (for example, time domain) is performed first based on the another multiplexing mode, and then frequency domain mapping is performed based on frequency division multiplexing. In addition, before frequency domain mapping, a quantity of terminal devices that performs mapping based on the another multiplexing mode is M (that is, a multiplexing factor of the another multiplexing mode is M).

In some implementations, the index of the first channel determined by the first terminal device from the first channel group is determined based on the following formula: floor(Service ID /M) mod K, where the "floor" denotes a rounding down operation; and the "mod" denotes a remainder operation.

In some implementations, if the index of the first channel group is determined based on the Tag ID of the first terminal device, the index of the first channel is determined based on the following formula: floor(floor(Service ID/M)/L) mod K; if the index of the first channel group is not determined based on the Tag ID of the first terminal device, the index of the first channel is determined based on the following formula: floor(Service ID/M) mod K. The "floor" denotes a rounding down operation; L denotes the quantity of the channel groups; and the "mod" denotes a remainder operation.

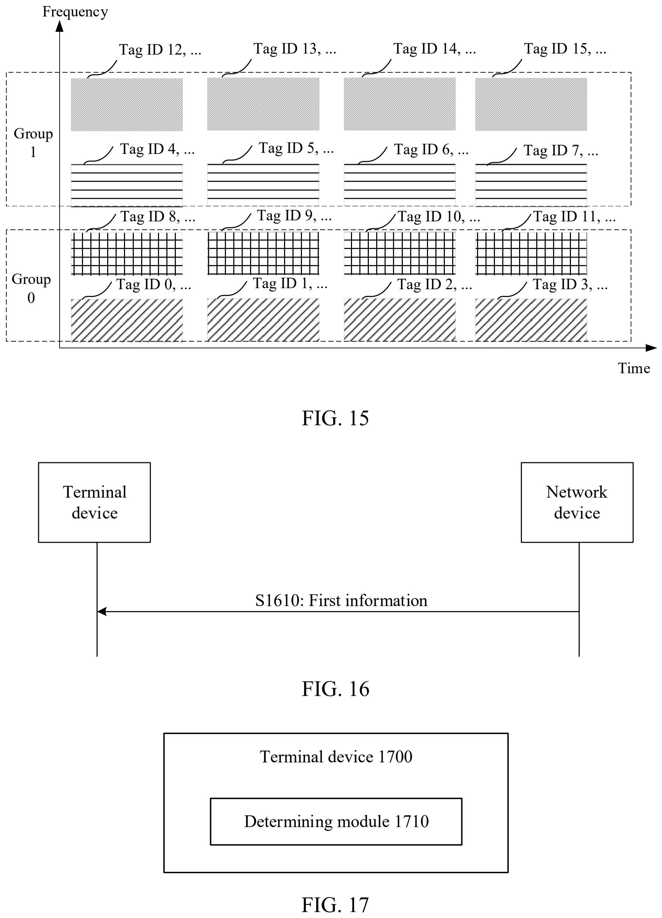

The following provides two more specific examples with reference to FIG. 14 and FIG. 15.

For example, the current cell supports only a frequency division multiplexing mode, and the current cell supports four channels in frequency domain, where every two channels are grouped into a channel group. In this case, a mapping relationship between the Tag ID of the first terminal device and the first channel may be as shown in FIG. 14.

For another example, the current cell supports both a frequency division multiplexing mode and a time division multiplexing mode; and the current cell adopts a channel selection mode of first performing time division multiplexing and then performing frequency division multiplexing. In addition, a time domain multiplexing factor of the current cell is 4, and the current cell supports four sub-channels in frequency domain, where every two channels are grouped into a channel group. In this case, a mapping relationship between the Tag ID of the first terminal device and the first channel may be as shown in FIG. 15.

### Embodiment 3: The first information including the first indication information transmitted by the network device

In some embodiments, the first indication information may be used to determine the first channel from the plurality of channels.

In some embodiments, the first indication information may be used to indicate the first channel to the first terminal device.

In some embodiments, the first indication information may be carried in dedicated signalling of the first terminal device. The dedicated signalling may be, for example, radio resource control (radio resource control, RRC) dedicated signalling, a medium access control control element (medium access control control element, MAC CE), or a physical downlink control channel (physical downlink control channel, PDCCH). A channel of a terminal device is configured based on the dedicated signalling of the terminal device , so that the network device may more flexibly control a channel used by a single terminal device.

### Embodiment 4: The first information including the first identity associated with the first terminal device

In some embodiments, the first identity may include one or more of the following identities: a Tag ID of the first terminal device; a Service ID of the first terminal device; or a Group ID of a terminal device group to which the first terminal device belongs.

For example, the first terminal device may be a zero-power device; the first identity may be a Tag ID of a tag of the zero-power device; and the Tag ID may be an identity written into the tag after the tag leaves the factory or is activated, or may be a short number identity that represents the tag.

For another example, the first terminal device may be a zero-power device; the first identity is a Service ID of a tag of the zero-power device; and the Service ID may be an identity written into the tag after the tag leaves the factory or is activated.

For another example, the first terminal device may be a zero-power device; the first identity is a Group ID of a tag of the zero-power device; and the Group ID may be an identity written into the tag after the tag leaves the factory or is activated.

In some embodiments, the first channel may be determined from the plurality of channels based only on the first identity. For example, a remainder obtained by performing a division operation on the first identity and the quantity of the plurality of channels may be determined first, and then the first channel may be determined from the plurality of channels based on the remainder.

In some embodiments, the first channel may be determined from the plurality of channels with reference to the first identity and other information. For example, the first channel may be determined from the plurality of channels based on a combination of the first identity and the weight parameters mentioned in Embodiment 1. For detailed description, one may refer to Embodiment 1. For another example, the first channel may be determined from the plurality of channels based on a combination of the first identity and the first channel group mentioned in Embodiment 2. For detailed description, one may refer to Embodiment 2.

In some embodiments, some or all of the first information mentioned above may be transmitted by the network device. For example, referring to FIG. 16, in step S1610, the network device transmits the first information. The first information may be used by the first terminal device to determine the first channel from the plurality of channels supported by the current cell. In some embodiments, the first information may include one or more of the following: weight parameters of the plurality of channels; a first channel group to which the first terminal device belongs, where the plurality of channels belong to a plurality of channel groups, and the first channel group is one of the plurality of channel groups; or first indication information, where the first indication information is used to indicate the first channel to the first terminal device.

In some embodiments, the channel mentioned in the foregoing embodiments may also be referred to as a sub-channel.

The foregoing describes in detail the method embodiments of this application with reference to FIG. 1 to FIG. 16. The following describes in detail apparatus embodiments of this application with reference to FIG. 17 to FIG. 19. It should be understood that the description of the method embodiments corresponds to the description of the apparatus embodiments, and therefore, for a part that is not described in detail, reference may be made to the foregoing method embodiments.

FIG. 17 is a schematic structural diagram of a terminal device according to an embodiment of this application. The terminal device 1700 in FIG. 17 may be the first terminal device described above. The terminal device 1700 may include a determining module 1710. The determining module 1710 may be configured to determine, based on first information, a first channel from a plurality of channels supported by a current cell. The first information includes one or more of the following: weight parameters of the plurality of channels; a first identity associated with the first terminal device; a first channel group to which the first terminal device belongs, where the plurality of channels belong to a plurality of channel groups, and the first channel group is one of the plurality of channel groups; or first indication information transmitted by a network device, where the first indication information is used to indicate the first channel to the first terminal device.

In some embodiments, the first channel is determined based on the weight parameter and second information, and the second information includes at least one of the following: the first identity; or a quantity of the plurality of channels.

In some embodiments, the first identity includes one or more of the following identities: a Tag ID of the first terminal device; a Service ID of the first terminal device; or a Group ID of a terminal device group to which the first terminal device belongs.

In some embodiments, a type of the first identity is determined based on a type of a trigger signal, and the trigger signal is used to trigger the first terminal device to perform backscatter communication.

In some embodiments, if the trigger signal is a trigger signal for a single terminal device, the first identity is the Tag ID of the first terminal device; or if the trigger signal is a trigger signal for a service, the first identity is the Service ID of the first terminal device; or if the trigger signal is a trigger signal for a terminal device group, the first identity is the Group ID of the terminal device group to which the first terminal device belongs.

In some embodiments, the first channel is determined based on the weight parameter, the second information, and a first rule; and the first rule is associated with a multiple access mode supported by the current cell.

In some embodiments, if the current cell supports only a frequency division multiple access mode, the first rule is: selecting a channel based on the frequency division multiple access mode; or if the current cell supports a frequency division multiple access mode and another multiple access mode, and the frequency division multiple access mode takes precedence, the first rule is: first selecting a channel based on the frequency division multiple access mode, and then selecting a channel based on the another multiple access mode; or if the current cell supports a frequency division multiple access mode and another multiple access mode, and the another multiple access mode takes precedence, the first rule is: first selecting a channel based on the another multiple access mode, and then selecting a channel based on the frequency division multiple access mode.

In some embodiments, the first channel is determined based on the first channel group and third information, and the third information includes at least one of the following: the first identity; or a quantity of channels included in the first channel group.

In some embodiments, the first channel is determined based on the first channel group, the third information, and a second rule; and the second rule is associated with a multiple access mode supported by the current cell.

In some embodiments, if the current cell supports only a frequency division multiple access mode, the second rule is: selecting a channel based on the frequency division multiple access mode; or if the current cell supports a frequency division multiple access mode and another multiple access mode, and the frequency division multiple access mode takes precedence, the second rule is: first selecting a channel based on the frequency division multiple access mode, and then selecting a channel based on the another multiple access mode; or if the current cell supports a frequency division multiple access mode and another multiple access mode, and the another multiple access mode takes precedence, the second rule is: first selecting a channel based on the another multiple access mode, and then selecting a channel based on the frequency division multiple access mode.

In some embodiments, the first channel group is determined based on fourth information, and the fourth information includes at least one of the following: the first identity; or a quantity of channel groups included in the current cell.

In some embodiments, the first channel group is determined based on the fourth information and a third rule; and the third rule is associated with a multiple access mode supported by the current cell.

In some embodiments, if the current cell supports only a frequency division multiple access mode, the third rule is: selecting a channel group based on the frequency division multiple access mode; or if the current cell supports a frequency division multiple access mode and another multiple access mode, and the frequency division multiple access mode takes precedence, the third rule is: first selecting a channel group based on the frequency division multiple access mode, and then selecting a channel group based on the another multiple access mode; or if the current cell supports a frequency division multiple access mode and another multiple access mode, and the another multiple access mode takes precedence, the third rule is: first selecting a channel group based on the another multiple access mode, and then selecting a channel group based on the frequency division multiple access mode.

In some embodiments, the first channel group is determined based on mapping relationship information transmitted by the network device, and the mapping relationship information is used to indicate a mapping relationship between the first identity and the first channel group.

In some embodiments, the first identity includes at least one of the following: a Tag ID of the first terminal device; or a Service ID of the first terminal device.

In some embodiments, the first indication information is carried in dedicated signalling of a terminal device.

In some embodiments, the first terminal device is a zero-power terminal.

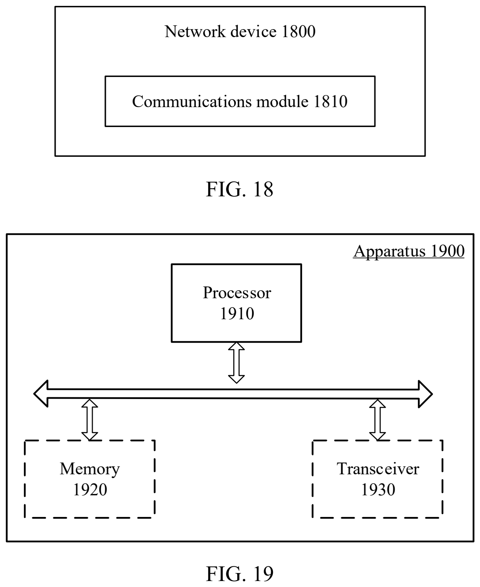

FIG. 18 is a schematic structural diagram of a network device according to an embodiment of this application. The network device 1800 shown in FIG. 18 may include a communications module 18 10. The communications module 1810 may be configured to transmit first information, where the first information is used by a first terminal device to determine a first channel from a plurality of channels supported by a current cell. The first information includes one or more of the following: weight parameters of the plurality of channels; a first channel group to which the first terminal device belongs, where the plurality of channels belong to a plurality of channel groups, and the first channel group is one of the plurality of channel groups; or first indication information, where the first indication information is used to indicate the first channel to the first terminal device.

In some embodiments, the first channel is determined based on the weight parameter and second information, and the second information includes at least one of the following: a first identity associated with the first terminal device; or a quantity of the plurality of channels.

In some embodiments, the first identity includes one or more of the following identities: a Tag ID of the first terminal device; a Service ID of the first terminal device; or a Group ID of a terminal device group to which the first terminal device belongs.

In some embodiments, a type of the first identity is determined based on a type of a trigger signal, and the trigger signal is used to trigger the first terminal device to perform backscatter communication.

In some embodiments, if the trigger signal is a trigger signal for a single terminal device, the first identity is the Tag ID of the first terminal device; or if the trigger signal is a trigger signal for a service, the first identity is the Service ID of the first terminal device; or if the trigger signal is a trigger signal for a terminal device group, the first identity is the Group ID of the terminal device group to which the first terminal device belongs.

In some embodiments, the first channel is determined based on the weight parameter, the second information, and a first rule; and the first rule is associated with a multiple access mode supported by the current cell.

In some embodiments, if the current cell supports only a frequency division multiple access mode, the first rule is: selecting a channel based on the frequency division multiple access mode; or if the current cell supports a frequency division multiple access mode and another multiple access mode, and the frequency division multiple access mode takes precedence, the first rule is: first selecting a channel based on the frequency division multiple access mode, and then selecting a channel based on the another multiple access mode; or if the current cell supports a frequency division multiple access mode and another multiple access mode, and the another multiple access mode takes precedence, the first rule is: first selecting a channel based on the another multiple access mode, and then selecting a channel based on the frequency division multiple access mode.

In some embodiments, the first channel is determined based on the first channel group and third information, and the third information includes at least one of the following: a first identity associated with the first terminal device; or a quantity of channels included in the first channel group.

In some embodiments, the first channel is determined based on the first channel group, the third information, and a second rule; and the second rule is associated with a multiple access mode supported by the current cell.

In some embodiments, if the current cell supports only a frequency division multiple access mode, the second rule is: selecting a channel based on the frequency division multiple access mode; or if the current cell supports a frequency division multiple access mode and another multiple access mode, and the frequency division multiple access mode takes precedence, the second rule is: first selecting a channel based on the frequency division multiple access mode, and then selecting a channel based on the another multiple access mode; or if the current cell supports a frequency division multiple access mode and another multiple access mode, and the another multiple access mode takes precedence, the second rule is: first selecting a channel based on the another multiple access mode, and then selecting a channel based on the frequency division multiple access mode.

In some embodiments, the first channel group is determined based on fourth information, and the fourth information includes at least one of the following: a first identity associated with the first terminal device; or a quantity of channel groups included in the current cell.

In some embodiments, the first channel group is determined based on the fourth information and a third rule; and the third rule is associated with a multiple access mode supported by the current cell.

In some embodiments, if the current cell supports only a frequency division multiple access mode, the third rule is: selecting a channel group based on the frequency division multiple access mode; or if the current cell supports a frequency division multiple access mode and another multiple access mode, and the frequency division multiple access mode takes precedence, the third rule is: first selecting a channel group based on the frequency division multiple access mode, and then selecting a channel group based on the another multiple access mode; or if the current cell supports a frequency division multiple access mode and another multiple access mode, and the another multiple access mode takes precedence, the third rule is: first selecting a channel group based on the another multiple access mode, and then selecting a channel group based on the frequency division multiple access mode.

In some embodiments, the first channel group is determined based on mapping relationship information transmitted by the network device, and the mapping relationship information is used to indicate a mapping relationship between the first identity and the first channel group.

In some embodiments, the first identity includes at least one of the following: a Tag ID of the first terminal device; or a Service ID of the first terminal device.

In some embodiments, the first indication information is carried in dedicated signalling of a terminal device.

In some embodiments, the first terminal device is a zero-power terminal.

FIG. 19 is a schematic structural diagram of a communications apparatus according to an embodiment of this application. Dashed lines in FIG. 19 indicate that the units or modules are optional. The apparatus 1900 may be configured to implement the method described in the foregoing method embodiments. The apparatus 1900 may be a chip, a terminal device, or a network device.

The apparatus 1900 may include one or more processors 1910. The processor 1910 may support the apparatus 1900 in implementing the method described in the foregoing method embodiments. The processor 1910 may be a general-purpose processor or a dedicated processor. For example, the processor may be a central processing unit (central processing unit, CPU). Alternatively, the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1900 may further include one or more memories 1920. The memory 1920 stores a program. The program may be executed by the processor 1910, to cause the processor 1910 to execute the method described in the foregoing method embodiments. The memory 1920 may be separate from the processor 1910 or may be integrated into the processor 1910.

The apparatus 1900 may further include a transceiver 1930. The processor 1910 may communicate with another device or chip by using the transceiver 1930. For example, the processor 1910 may transmit data to and receive data from another device or chip by using the transceiver 1930.

An embodiment of this application further provides a computer-readable storage medium for storing a program. The computer-readable storage medium may be applied to the terminal device or the network device provided in embodiments of this application, and the program causes a computer to execute the method to be executed by the terminal device or the network device in various embodiments of this application.

An embodiment of this application further provides a computer program product. The computer program product includes a program. The computer program product may be applied to the terminal device or the network device provided in embodiments of this application, and the program causes a computer to execute the method to be executed by the terminal device or the network device in various embodiments of this application.

An embodiment of this application further provides a computer program. The computer program may be applied to the terminal device or the network device provided in embodiments of this application, and the computer program causes a computer to execute the method to be executed by the terminal device or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indirectly indicates B, for example, A indicates C, and B may be obtained from C. Alternatively, it may mean that there is an association relationship between A and B.

In embodiments of this application, "B corresponding to A" means that B is associated with A, and B may be determined based on A. However, it should also be understood that determining B based on A does not mean determining B based only on A, but instead, B may be determined based on A and/or other information.

In embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented by using some interfaces. Indirect couplings or communication connections between apparatuses or units may be implemented in electrical, mechanical, or other forms.

Units described as separate components may be or may not be physically separate, and components displayed as units may be or may not be physical units, and may be located in one position or may be distributed on a plurality of network units. Some or all of the units may be selected according to actual needs to achieve the objective of solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) manner or a wireless (for example, infrared, wireless, or microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
determining, by a first terminal device based on first information, a first channel from a plurality of channels supported by a current cell,
wherein the first information comprises one or more of following:
weight parameters of the plurality of channels;
a first identity associated with the first terminal device;
a first channel group to which the first terminal device belongs, wherein the plurality of channels belong to a plurality of channel groups, and the first channel group is one of the plurality of channel groups; or
first indication information transmitted by a network device, wherein the first indication information is used to indicate the first channel to the first terminal device.

2. The method according to claim 1, wherein the first channel is determined based on the weight parameter and second information, and the second information comprises at least one of following:
the first identity; or
a quantity of the plurality of channels.

3. The method according to claim 2, wherein the first identity comprises one or more of following identities:
a tag identity of the first terminal device;
a service identity of the first terminal device; or
a group identity of a terminal device group to which the first terminal device belongs.

4. The method according to claim 3, wherein a type of the first identity is determined based on a type of a trigger signal, and the trigger signal is used to trigger the first terminal device to perform backscatter communication.

5. The method according to claim 4, wherein
if the trigger signal is a trigger signal for a single terminal device, the first identity is the tag identity of the first terminal device; or
if the trigger signal is a trigger signal for a service, the first identity is the service identity of the first terminal device; or
if the trigger signal is a trigger signal for a terminal device group, the first identity is the group identity of the terminal device group to which the first terminal device belongs.

6. The method according to any one of claims 2 to 5, wherein the first channel is determined based on the weight parameter, the second information, and a first rule; and the first rule is associated with a multiple access mode supported by the current cell.

7. The method according to claim 6, wherein
if the current cell supports only a frequency division multiple access mode, the first rule is: selecting a channel based on the frequency division multiple access mode; or
if the current cell supports a frequency division multiple access mode and another multiple access mode, and the frequency division multiple access mode takes precedence, the first rule is: first selecting a channel based on the frequency division multiple access mode, and then selecting a channel based on the another multiple access mode; or
if the current cell supports a frequency division multiple access mode and another multiple access mode, and the another multiple access mode takes precedence, the first rule is: first selecting a channel based on the another multiple access mode, and then selecting a channel based on the frequency division multiple access mode.

8. The method according to claim 1, wherein the first channel is determined based on the first channel group and third information, and the third information comprises at least one of following:
the first identity; or
a quantity of channels comprised in the first channel group.

9. The method according to claim 8, wherein the first channel is determined based on the first channel group, the third information, and a second rule; and the second rule is associated with a multiple access mode supported by the current cell.

10. The method according to claim 9, wherein
if the current cell supports only a frequency division multiple access mode, the second rule is: selecting a channel based on the frequency division multiple access mode; or
if the current cell supports a frequency division multiple access mode and another multiple access mode, and the frequency division multiple access mode takes precedence, the second rule is: first selecting a channel based on the frequency division multiple access mode, and then selecting a channel based on the another multiple access mode; or
if the current cell supports a frequency division multiple access mode and another multiple access mode, and the another multiple access mode takes precedence, the second rule is: first selecting a channel based on the another multiple access mode, and then selecting a channel based on the frequency division multiple access mode.

11. The method according to any one of claims 1 to 10, wherein the first channel group is determined based on fourth information, and the fourth information comprises at least one of following:
the first identity; or
a quantity of channel groups comprised in the current cell.

12. The method according to claim 11, wherein the first channel group is determined based on the fourth information and a third rule; and the third rule is associated with a multiple access mode supported by the current cell.

13. The method according to claim 12, wherein
if the current cell supports only a frequency division multiple access mode, the third rule is: selecting a channel group based on the frequency division multiple access mode; or
if the current cell supports a frequency division multiple access mode and another multiple access mode, and the frequency division multiple access mode takes precedence, the third rule is: first selecting a channel group based on the frequency division multiple access mode, and then selecting a channel group based on the another multiple access mode; or
if the current cell supports a frequency division multiple access mode and another multiple access mode, and the another multiple access mode takes precedence, the third rule is: first selecting a channel group based on the another multiple access mode, and then selecting a channel group based on the frequency division multiple access mode.

14. The method according to any one of claims 1 to 10, wherein the first channel group is determined based on mapping relationship information transmitted by the network device, and the mapping relationship information is used to indicate a mapping relationship between the first identity and the first channel group.

15. The method according to any one of claims 8 to 14, wherein the first identity comprises at least one of following:
a tag identity of the first terminal device; or
a service identity of the first terminal device.

16. The method according to claim 1, wherein the first indication information is carried in dedicated signalling of the terminal device.

17. The method according to any one of claims 1 to 16, wherein the first terminal device is a zero-power terminal.

18. A wireless communication method, comprising:
transmitting, by a network device, first information, wherein the first information is used by a first terminal device to determine a first channel from a plurality of channels supported by a current cell, and the first information comprises one or more of following:
weight parameters of the plurality of channels;
a first channel group to which the first terminal device belongs, wherein the plurality of channels belong to a plurality of channel groups, and the first channel group is one of the plurality of channel groups; or
first indication information, wherein the first indication information is used to indicate the first channel to the first terminal device.

19. The method according to claim 18, wherein the first channel is determined based on the weight parameter and second information, and the second information comprises at least one of following:
a first identity associated with the first terminal device; or
a quantity of the plurality of channels.

20. The method according to claim 19, wherein the first identity comprises one or more of following identities:
a tag identity of the first terminal device;
a service identity of the first terminal device; or
a group identity of a terminal device group to which the first terminal device belongs.

21. The method according to claim 20, wherein a type of the first identity is determined based on a type of a trigger signal, and the trigger signal is used to trigger the first terminal device to perform backscatter communication.

22. The method according to claim 21, wherein
if the trigger signal is a trigger signal for a single terminal device, the first identity is the tag identity of the first terminal device; or
if the trigger signal is a trigger signal for a service, the first identity is the service identity of the first terminal device; or
if the trigger signal is a trigger signal for a terminal device group, the first identity is the group identity of the terminal device group to which the first terminal device belongs.

23. The method according to any one of claims 19 to 22, wherein the first channel is determined based on the weight parameter, the second information, and a first rule; and the first rule is associated with a multiple access mode supported by the current cell.

24. The method according to claim 23, wherein
if the current cell supports only a frequency division multiple access mode, the first rule is: selecting a channel based on the frequency division multiple access mode; or
if the current cell supports a frequency division multiple access mode and another multiple access mode, and the frequency division multiple access mode takes precedence, the first rule is: first selecting a channel based on the frequency division multiple access mode, and then selecting a channel based on the another multiple access mode; or
if the current cell supports a frequency division multiple access mode and another multiple access mode, and the another multiple access mode takes precedence, the first rule is: first selecting a channel based on the another multiple access mode, and then selecting a channel based on the frequency division multiple access mode.

25. The method according to claim 18, wherein the first channel is determined based on the first channel group and third information, and the third information comprises at least one of following:
a first identity associated with the first terminal device; or
a quantity of channels comprised in the first channel group.

26. The method according to claim 25, wherein the first channel is determined based on the first channel group, the third information, and a second rule; and the second rule is associated with a multiple access mode supported by the current cell.

27. The method according to claim 26, wherein
if the current cell supports only a frequency division multiple access mode, the second rule is: selecting a channel based on the frequency division multiple access mode; or
if the current cell supports a frequency division multiple access mode and another multiple access mode, and the frequency division multiple access mode takes precedence, the second rule is: first selecting a channel based on the frequency division multiple access mode, and then selecting a channel based on the another multiple access mode; or
if the current cell supports a frequency division multiple access mode and another multiple access mode, and the another multiple access mode takes precedence, the second rule is: first selecting a channel based on the another multiple access mode, and then selecting a channel based on the frequency division multiple access mode.

28. The method according to any one of claims 18 to 27, wherein the first channel group is determined based on fourth information, and the fourth information comprises at least one of following:
a first identity associated with the first terminal device; or
a quantity of channel groups comprised in the current cell.

29. The method according to claim 28, wherein the first channel group is determined based on the fourth information and a third rule; and the third rule is associated with a multiple access mode supported by the current cell.

30. The method according to claim 29, wherein
if the current cell supports only a frequency division multiple access mode, the third rule is: selecting a channel group based on the frequency division multiple access mode; or
if the current cell supports a frequency division multiple access mode and another multiple access mode, and the frequency division multiple access mode takes precedence, the third rule is: first selecting a channel group based on the frequency division multiple access mode, and then selecting a channel group based on the another multiple access mode; or
if the current cell supports a frequency division multiple access mode and another multiple access mode, and the another multiple access mode takes precedence, the third rule is: first selecting a channel group based on the another multiple access mode, and then selecting a channel group based on the frequency division multiple access mode.

31. The method according to any one of claims 18 to 27, wherein the first channel group is determined based on mapping relationship information transmitted by the network device, and the mapping relationship information is used to indicate a mapping relationship between the first identity and the first channel group.

32. The method according to any one of claims 25 to 31, wherein the first identity comprises at least one of following:
a tag identity of the first terminal device; or
a service identity of the first terminal device.

33. The method according to claim 18, wherein the first indication information is carried in dedicated signalling of a terminal device.

34. The method according to any one of claims 18 to 33, wherein the first terminal device is a zero-power terminal.

35. A terminal device, wherein the terminal device is a first terminal device, and the first terminal device comprises:
a determining module, configured to determine, based on first information, a first channel from a plurality of channels supported by a current cell,
wherein the first information comprises one or more of following:
weight parameters of the plurality of channels;
a first identity associated with the first terminal device;
a first channel group to which the first terminal device belongs, wherein the plurality of channels belong to a plurality of channel groups, and the first channel group is one of the plurality of channel groups; or
first indication information transmitted by a network device, wherein the first indication information is used to indicate the first channel to the first terminal device.

36. The terminal device according to claim 35, wherein the first channel is determined based on the weight parameter and second information, and the second information comprises at least one of following:
the first identity; or
a quantity of the plurality of channels.

37. The terminal device according to claim 36, wherein the first identity comprises one or more of following identities:
a tag identity of the first terminal device;
a service identity of the first terminal device; or
a group identity of a terminal device group to which the first terminal device belongs.

38. The terminal device according to claim 37, wherein a type of the first identity is determined based on a type of a trigger signal, and the trigger signal is used to trigger the first terminal device to perform backscatter communication.

39. The terminal device according to claim 38, wherein
if the trigger signal is a trigger signal for a single terminal device, the first identity is the tag identity of the first terminal device; or
if the trigger signal is a trigger signal for a service, the first identity is the service identity of the first terminal device; or
if the trigger signal is a trigger signal for a terminal device group, the first identity is the group identity of the terminal device group to which the first terminal device belongs.

40. The terminal device according to any one of claims 36 to 39, wherein the first channel is determined based on the weight parameter, the second information, and a first rule; and the first rule is associated with a multiple access mode supported by the current cell.

41. The terminal device according to claim 40, wherein
if the current cell supports only a frequency division multiple access mode, the first rule is: selecting a channel based on the frequency division multiple access mode; or
if the current cell supports a frequency division multiple access mode and another multiple access mode, and the frequency division multiple access mode takes precedence, the first rule is: first selecting a channel based on the frequency division multiple access mode, and then selecting a channel based on the another multiple access mode; or
if the current cell supports a frequency division multiple access mode and another multiple access mode, and the another multiple access mode takes precedence, the first rule is: first selecting a channel based on the another multiple access mode, and then selecting a channel based on the frequency division multiple access mode.

42. The terminal device according to claim 35, wherein the first channel is determined based on the first channel group and third information, and the third information comprises at least one of following:
the first identity; or
a quantity of channels comprised in the first channel group.

43. The terminal device according to claim 42, wherein the first channel is determined based on the first channel group, the third information, and a second rule; and the second rule is associated with a multiple access mode supported by the current cell.

44. The terminal device according to claim 43, wherein
if the current cell supports only a frequency division multiple access mode, the second rule is: selecting a channel based on the frequency division multiple access mode; or
if the current cell supports a frequency division multiple access mode and another multiple access mode, and the frequency division multiple access mode takes precedence, the second rule is: first selecting a channel based on the frequency division multiple access mode, and then selecting a channel based on the another multiple access mode; or
if the current cell supports a frequency division multiple access mode and another multiple access mode, and the another multiple access mode takes precedence, the second rule is: first selecting a channel based on the another multiple access mode, and then selecting a channel based on the frequency division multiple access mode.

45. The terminal device according to any one of claims 35 to 44, wherein the first channel group is determined based on fourth information, and the fourth information comprises at least one of following:
the first identity; or
a quantity of channel groups comprised in the current cell.

46. The terminal device according to claim 45, wherein the first channel group is determined based on the fourth information and a third rule; and the third rule is associated with a multiple access mode supported by the current cell.

47. The terminal device according to claim 46, wherein
if the current cell supports only a frequency division multiple access mode, the third rule is: selecting a channel group based on the frequency division multiple access mode; or
if the current cell supports a frequency division multiple access mode and another multiple access mode, and the frequency division multiple access mode takes precedence, the third rule is: first selecting a channel group based on the frequency division multiple access mode, and then selecting a channel group based on the another multiple access mode; or
if the current cell supports a frequency division multiple access mode and another multiple access mode, and the another multiple access mode takes precedence, the third rule is: first selecting a channel group based on the another multiple access mode, and then selecting a channel group based on the frequency division multiple access mode.

48. The terminal device according to any one of claims 35 to 44, wherein the first channel group is determined based on mapping relationship information transmitted by the network device, and the mapping relationship information is used to indicate a mapping relationship between the first identity and the first channel group.

49. The terminal device according to any one of claims 42 to 48, wherein the first identity comprises at least one of following:
a tag identity of the first terminal device; or
a service identity of the first terminal device.

50. The terminal device according to claim 35, wherein the first indication information is carried in dedicated signalling of a terminal device.

51. The terminal device according to any one of claims 35 to 50, wherein the first terminal device is a zero-power terminal.

52. A network device, comprising:
a communications module, configured to transmit first information, wherein the first information is used by a first terminal device to determine a first channel from a plurality of channels supported by a current cell, and the first information comprises one or more of following:
weight parameters of the plurality of channels;
a first channel group to which the first terminal device belongs, wherein the plurality of channels belong to a plurality of channel groups, and the first channel group is one of the plurality of channel groups; or
first indication information, wherein the first indication information is used to indicate the first channel to the first terminal device.

53. The network device according to claim 52, wherein the first channel is determined based on the weight parameter and second information, and the second information comprises at least one of following:
a first identity associated with the first terminal device; or
a quantity of the plurality of channels.

54. The network device according to claim 53, wherein the first identity comprises one or more of following identities:
a tag identity of the first terminal device;
a service identity of the first terminal device; or
a group identity of a terminal device group to which the first terminal device belongs.

55. The network device according to claim 54, wherein a type of the first identity is determined based on a type of a trigger signal, and the trigger signal is used to trigger the first terminal device to perform backscatter communication.

56. The network device according to claim 55, wherein
if the trigger signal is a trigger signal for a single terminal device, the first identity is the tag identity of the first terminal device; or
if the trigger signal is a trigger signal for a service, the first identity is the service identity of the first terminal device; or
if the trigger signal is a trigger signal for a terminal device group, the first identity is the group identity of the terminal device group to which the first terminal device belongs.

57. The network device according to any one of claims 53 to 56, wherein the first channel is determined based on the weight parameter, the second information, and a first rule; and the first rule is associated with a multiple access mode supported by the current cell.

58. The network device according to claim 57, wherein
if the current cell supports only a frequency division multiple access mode, the first rule is: selecting a channel based on the frequency division multiple access mode; or
if the current cell supports a frequency division multiple access mode and another multiple access mode, and the frequency division multiple access mode takes precedence, the first rule is: first selecting a channel based on the frequency division multiple access mode, and then selecting a channel based on the another multiple access mode; or
if the current cell supports a frequency division multiple access mode and another multiple access mode, and the another multiple access mode takes precedence, the first rule is: first selecting a channel based on the another multiple access mode, and then selecting a channel based on the frequency division multiple access mode.

59. The network device according to claim 52, wherein the first channel is determined based on the first channel group and third information, and the third information comprises at least one of following:
a first identity associated with the first terminal device; or
a quantity of channels comprised in the first channel group.

60. The network device according to claim 59, wherein the first channel is determined based on the first channel group, the third information, and a second rule; and the second rule is associated with a multiple access mode supported by the current cell.

61. The network device according to claim 60, wherein
if the current cell supports only a frequency division multiple access mode, the second rule is: selecting a channel based on the frequency division multiple access mode; or
if the current cell supports a frequency division multiple access mode and another multiple access mode, and the frequency division multiple access mode takes precedence, the second rule is: first selecting a channel based on the frequency division multiple access mode, and then selecting a channel based on the another multiple access mode; or
if the current cell supports a frequency division multiple access mode and another multiple access mode, and the another multiple access mode takes precedence, the second rule is: first selecting a channel based on the another multiple access mode, and then selecting a channel based on the frequency division multiple access mode.

62. The network device according to any one of claims 52 to 61, wherein the first channel group is determined based on fourth information, and the fourth information comprises at least one of following:
a first identity associated with the first terminal device; or
a quantity of channel groups comprised in the current cell.

63. The network device according to claim 62, wherein the first channel group is determined based on the fourth information and a third rule; and the third rule is associated with a multiple access mode supported by the current cell.

64. The network device according to claim 63, wherein
if the current cell supports only a frequency division multiple access mode, the third rule is: selecting a channel group based on the frequency division multiple access mode; or
if the current cell supports a frequency division multiple access mode and another multiple access mode, and the frequency division multiple access mode takes precedence, the third rule is: first selecting a channel group based on the frequency division multiple access mode, and then selecting a channel group based on the another multiple access mode; or
if the current cell supports a frequency division multiple access mode and another multiple access mode, and the another multiple access mode takes precedence, the third rule is: first selecting a channel group based on the another multiple access mode, and then selecting a channel group based on the frequency division multiple access mode.

65. The network device according to any one of claims 52 to 61, wherein the first channel group is determined based on mapping relationship information transmitted by the network device, and the mapping relationship information is used to indicate a mapping relationship between the first identity and the first channel group.

66. The network device according to any one of claims 59 to 65, wherein the first identity comprises at least one of following:
a tag identity of the first terminal device; or
a service identity of the first terminal device.

67. The network device according to claim 52, wherein the first indication information is carried in dedicated signalling of a terminal device.

68. The network device according to any one of claims 52 to 67, wherein the first terminal device is a zero-power terminal.

69. A terminal device, comprising a transceiver, a memory, and a processor, wherein the memory is configured to store a program, and the processor is configured to invoke the program in the memory and control the transceiver to receive or transmit a signal, to cause the terminal device to execute the method according to any one of claims 1 to 17.

70. A network device, comprising a transceiver, a memory, and a processor, wherein the memory is configured to store a program, and the processor is configured to invoke the program in the memory and control the transceiver to transmit or receive a signal, to cause the network device to execute the method according to any one of claims 18 to 34.

71. An apparatus, comprising a processor, configured to invoke a program from a memory, to cause the apparatus to execute the method according to any one of claims 1 to 17 or claims 18 to 34.

72. A chip, comprising a processor, configured to invoke a program from a memory, to cause a device installed with the chip to execute the method according to any one of claims 1 to 17 or claims 18 to 34.

73. A computer-readable storage medium, storing a program, wherein the program causes a computer to execute the method according to any one of claims 1 to 17 or claims 18 to 34.

74. A computer program product, comprising a program, wherein the program causes a computer to execute the method according to any one of claims 1 to 17 or claims 18 to 34.

75. A computer program, wherein the computer program causes a computer to execute the method according to any one of claims 1 to 17 or claims 18 to 34.
